# EUROPEAN PATENT SPECIFICATION

(11) **EP 2 682 250 B1**
(45) Date of publication and mention of the grant of the patent: **01.05.2019**
(21) Application number: 13175182.8
(22) Date of filing: 04.07.2013
(51) Int. Cl.: B29C 51/40, B29C 33/10, B29C 51/26, B29C 51/04, B29C 51/10

(54) **Mould with improved venting, thermo-forming device and method**
Form mit verbesserter Belüftung, Wärmeformvorrichtung und Verfahren
Moule avec aération améliorée, procédé et dispositif de thermoformage

(30) Priority: 06.07.2012 NL 2009155
(43) Date of publication of application: 08.01.2014
(73) Proprietor: Bosch Sprang B.V., 5161 DA Sprang-Capelle (NL)
(72) Inventor: Bosch, Antoni, 5161 EE Sprang-Capelle (NL)
(74) Representative: Farago-Schauer, Peter Andreas

(56) References cited:
- GB-A- 993 369
- GB-A- 1 445 990
- JP-A- 2011 098 532
- US-A- 3 453 162
- US-A- 5 074 770
- US-A1- 2008 044 603

## Description

The present invention relates to a mould with an improved venting. The present invention also relates to a thermoforming device provided with such a mould. The invention also relates to a method for forming a product making use of this thermoforming device.

Thermoforming is a known technique. This technique makes use of the fact that with sufficient heating the form of thermoplastic materials such as polypropylene (PP), polystyrene (PS) or polyethylene (PET) can be changed.

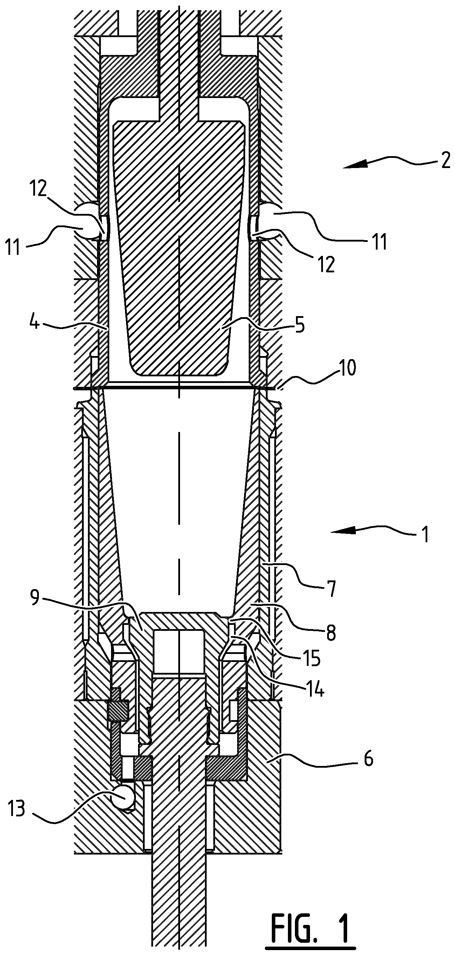

A vertical cross-section of an embodiment of a known thermoforming device is shown in figure 1. This figure shows a lower mould 1 and upper mould 2. Upper mould 2 comprises a cutting plate in which a hold-down element 4 is accommodated. Upper mould 2 further comprises a pre-stretcher 5 used to form the product, as will be described below.

Lower mould 1 comprises a base plate 6 to which a cooling jacket 7 is coupled. Lower mould 1 also comprises a forming sleeve 8 and a forming base 9 which together define the form of the product in a so-called mould cavity.

Figure 1 also shows a plastic foil 10 clamped between lower mould 1 and upper mould 2. This clamping is mainly brought about by means of the hold-down element 4.

Plastic foil 10 is heated, whereby it is deformable. Pre-stretcher 5 will move downward in order to form the product. Compressed air will also be carried through holes 11 and 12 in the direction of foil 10.

Figure 2 shows the situation in which foil 10 is pre-formed by the movement of pre-stretcher 5. Owing to the compressed air the foil 10 will lie against forming sleeve 8 and forming base 9. These elements have a considerably lower temperature than foil 10. Forming sleeve 8 for instance is thus cooled by cooling jacket 7. Because of the cooling the foil 10 will take on a fixed form.

Once the product has been formed, pre-stretcher 5 will move upward and the compressed air will be shut off. The lower mould will subsequently moved upward, whereby cooling jacket 7 moves in cutting plate while hold-down element 4 continues to clamp foil 10. This relative movement of cooling jacket 7 in cutting plate will separate the product from the rest of foil 10. It is noted here that cooling jacket 7 is manufactured from hard material in order to enhance the cutting.

A lower mould usually comprises a plurality of forming sleeves and forming bases for simultaneously forming a plurality of preferably identical products. Once these products have been formed the lower mould is moved for the purpose of releasing the products.

During forming of the product the space in forming sleeve 8 is closed on the upper side by the clamping of foil 10. In order to prevent foil 10 not lying properly against forming sleeve 8 and forming base 9 because of the air enclosed between these elements and foil 10, lower mould 1 is provided with one or more venting channels 13.

Venting channels 13 associated with a plurality of mould cavities in lower mould 1 are mutually connected and provide for venting out of lower mould 1.

Venting channels 13 comprise a space 14 and are connected to the mould cavity by means of narrow gaps 15 between for instance forming base 9 and forming sleeve 8. Forming base 9 and forming sleeve 8 can be provided in addition or instead with small holes debouching into a wider channel. The size of the holes has to be small such that no plastic will penetrate therein.

While compressed air is being applied from upper mould 2 the air enclosed between foil 10 and forming sleeve 8 and forming base 9 will leave lower mould 1 via venting channels 13. After the compressed air has been shut off the formed product will contract, whereby the contact with the forming sleeve and forming base is broken. This has the drawback that the further cooling, and therefore the product definition, will shown an uneven progression due to the absence of direct contact between foil 10 and forming sleeve 8 and forming base 9. A further drawback is that, once the product has been cut from the remaining part of foil 10, it may release from lower mould 1 during further processing such as the tilting of lower mould 1, which can have adverse consequences for further product processing.

A solution to these problems already known from the prior art is to apply vacuum. Venting channels 13 are evacuated here or provided with high underpressure. The pressure difference will press foil 10 against forming sleeve 8 and forming base 9, whereby the above stated problems will occur less.

Known from GB 993, 369, which discloses preamble of claim 1, is a device which makes use of vacuum to draw heated foil into a mould cavity. The foil can also be pressed into the mould cavity by means of a punch. The mould cavity is provided with perforations. These create a connection between the mould cavity and a distribution space. It is possible to draw in air from the mould cavity by means of a channel between a source of vacuum and the distribution space.

It is a general requirement in thermoforming to be able to produce products more quickly and with smaller tolerances in respect of variation in product geometry. The prior art can only fulfil this requirement to a limited extent.

It is an object of the present invention to provide a mould which can fulfil the above stated requirement.

This object is achieved by means of a mould according to claim 1. The thermoforming device comprises a mould, which mould comprises a base plate having accommodated therein at least one form-defining element, such as a forming sleeve and a forming base, for defining a mould cavity for a product to be formed from a heated plastic foil, wherein the mould is provided with a first venting channel which debouches into the mould cavity and is configured to discharge air between the foil and said at least one form-defining element.

The mould comprises a second venting channel which likewise debouches into the mould cavity and leads out of the mould, wherein the air resistance of the second venting channel is considerably lower than the air resistance of the first venting channel. The mould further comprises a one-way valve mounted in or on the second venting channel for the purpose of limiting or preventing an airflow from an area outside the mould through the second venting channel in the direction of the mould cavity.

The thermoforming device further comprises means, such as a vacuum pump, for evacuating or providing an underpressure in the first venting channel.

Because the air resistance of the second venting channel is considerably lower than the air resistance of the first venting channel, this channel is highly suitable for a rapid discharge of air between foil and form-defining element. The foil can hereby cool more quickly and efficiently, whereby variations in product geometry will decrease and whereby the throughput speed of the thermoforming device can be increased.

As elucidated above however, a vacuum is also desired for clamping or otherwise retaining the formed product in the mould. This also improves the cooling in that the product comes to lie properly against the form-defining element or elements. The vacuum can also serve as monitoring means for detecting possible poorly formed or not completely formed products. The thermoforming device will then not include these products in the further production line. The vacuum in the mould cavity also ensures that the products do not adhere to the cutting plate or the remaining part of the foil following downward movement of the lower mould.

This vacuum is made possible by evacuating and/or providing underpressure in the first venting channel. The one-way valve prevents air being drawn in from an area surrounding the mould. This latter would result in deterioration of the vacuum and/or underpressure.

In an embodiment the mould cavity is formed in an upper side of the mould and the second venting channel debouches in an underside of the mould. The mould is usually an elongate plate-like element, wherein the thickness of the mould, i.e. the distance between the upper side and underside, is considerably smaller than the width or length of the mould. In order to achieve the smallest possible air resistance it is therefore advantageous to have the second venting channel debouch in the underside of the mould. The term air resistance should be interpreted as the flow resistance an airflow would encounter in the channel.

In an embodiment the first venting channel and the second venting channel have a common part extending between the mould cavity and a branching point. Beyond this branching point the first venting channel will usually extend parallel to the upper side and the second venting channel will extend perpendicularly of the upper side in the direction of the underside.

In an embodiment the one-way valve is mounted downstream of the branching point. The term downstream should be understood here in the context of an airflow from the mould cavity. During evacuating and/or providing of underpressure in the first venting channel the one-way valve ensures that the part of the second venting channel downstream of the branching point plays little or no part in the evacuation.

By making use of a common part instead of separate channels, the common part can be embodied with a large diameter. This is advantageous for both venting and evacuating. The drawback of separate channels is that they cannot each have a large diameter because of the mutual separation that has to be ensured.

In an embodiment the one-way valve is mounted on or close to the underside of the mould.

In an embodiment the one-way valve comprises a mechanically pivoting valve which can pivot between a closed position, in which the valve lies against a stop such as an outer side of the mould and so at least partially closes the second venting channel, and an open position in which the valve is rotated away in order to leave the second venting channel clear. Such a valve can be electronically controllable. The moment of pivoting can then be chosen in accordance with the thermoforming process. The valve can thus be placed in closed position just before evacuating of the first venting channel and can be opened while compressed air is being applied in the mould cavity.

In another embodiment the one-way valve comprises a resilient and/or flexible element which can move between an open position for leaving clear the second venting channel and a closed position for at least partially closing the second venting channel. The resilient and/or flexible element preferably moves here as a result of a pressure difference over the valve.

The one-way valve can be configured to move to the open position as a result of an overpressure in the second venting channel relative to an area surrounding the mould and to move to the closed position as a result of an underpressure in the second venting channel relative to an area surrounding the mould. During evacuating of the first venting channel a pressure difference will thus be applied over the valve. This is for instance the case when the valve is arranged on the underside of the mould. Atmospheric pressure will prevail here on one side of the valve and an underpressure will prevail on the other side as a result of the evacuation.

The resilient and/or flexible element can be provided with a bias for movement to the closed position. Such a bias can be effected by the manner of mounting, the material properties of the resilient and/or flexible element or the form thereof. Use can alternatively or additionally be made of an external device such as a spring for the purpose of providing the bias.

It is recommended that the resilient and/or flexible element be mounted over an outlet of the second venting channel, wherein in the open position the resilient and/or flexible element is moved away from the outlet so as to leave it clear and wherein in the closed position the resilient and/or flexible element at least partially covers the outlet.

In an embodiment the mould comprises a mounting element on the underside of the mould which is provided with a peripheral groove, wherein the second venting channel debouches into an area around the mounting element and wherein the resilient and/or flexible element is mounted in the peripheral groove and extends at least in the closed position over the outlet of the second venting channel for closing thereof.

The resilient and/or flexible element can for instance be embodied as a disc with a hole in the centre. The disc can then be mounted around a cylindrically formed mounting element in a peripheral groove in this element. The second venting channel debouches in close proximity to the mounting element, this such that the disc can cover this outlet in the closed position.

In a further embodiment the mould comprises a knock-out pin for engaging the forming base and knocking out the product formed in the mould cavity. The mounting element can here comprise a sleeve which is connected to the base plate and in which the knock-out pin can move. In this embodiment the second venting channels preferably run parallel to the knock-out pin through the mould. A compact mould can thus be obtained with a minimal air resistance in the second venting channel.

The flexible and/or resilient element can be manufactured from at least one material from the group of materials consisting of: rubber and plastic.

In an embodiment a plurality of second venting channels are formed per mould cavity and the one-way valve is configured to simultaneously limit or prevent an airflow from a surrounding area outside the mould through the plurality of second venting channels in the direction of the mould cavity. By making use of a plurality of channels the overall air resistance between mould cavity and area surrounding the mould can be further reduced.

In a further embodiment the mould comprises a plurality of mould cavities, wherein the first venting channels associated with the plurality of mould cavities debouch into a common venting channel, and wherein the second venting channels are separated per mould cavity from the second venting channels of an adjacent mould cavity. The use of a common channel provides advantages because it simplifies the connection to for instance a pump. This in contrast to the second venting channels, which are preferably not common but each provide the lowest possible air resistance to the airflow from the mould cavity.

According to a second aspect, the present invention provides a thermoforming device as defined in claim 2.

According to a third aspect, the present invention provides a method for forming a product as defined in claim 18.

The invention will be discussed in more detail hereinbelow, wherein:
Figure 1 shows a vertical cross-section of a known upper and lower mould between which a plastic foil is clamped;

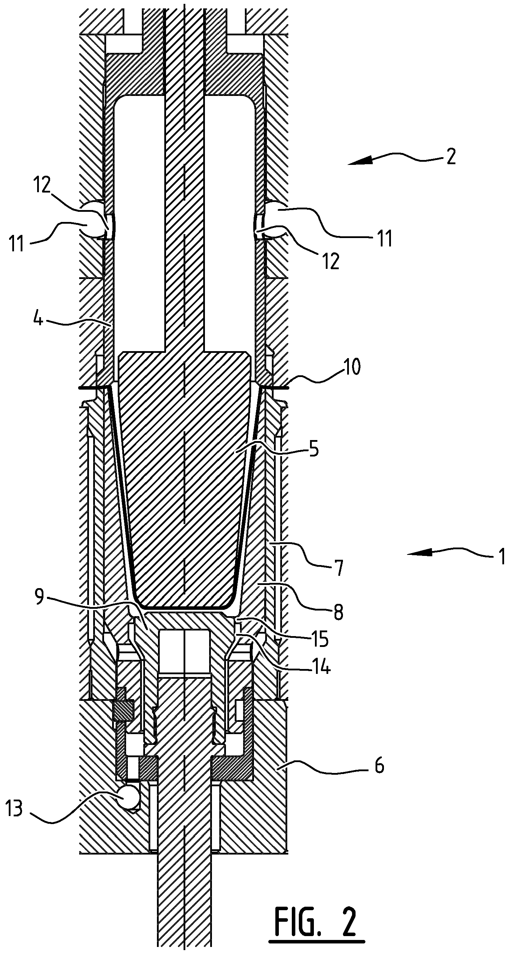

Figure 2 shows the upper and lower mould of figure 1 in a situation in which the pre-stretcher has been moved so as to form the product;

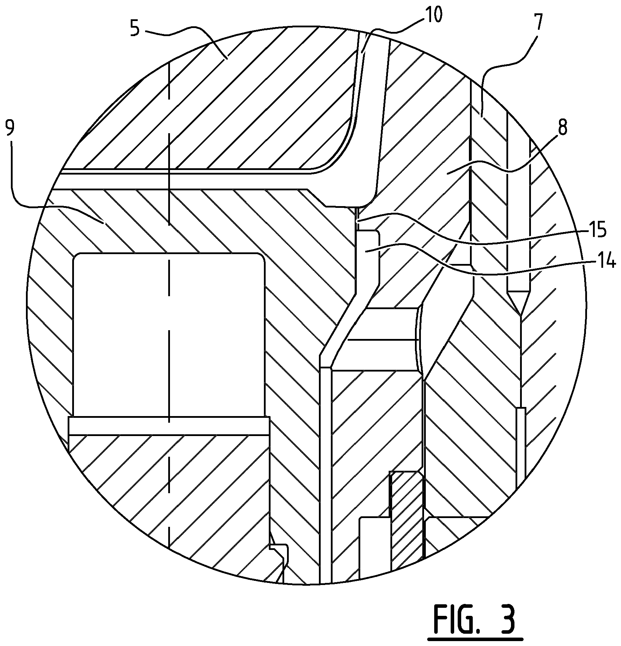

Figure 3 is a detail view of the lower mould of figure 2 at the position of the mould cavity;

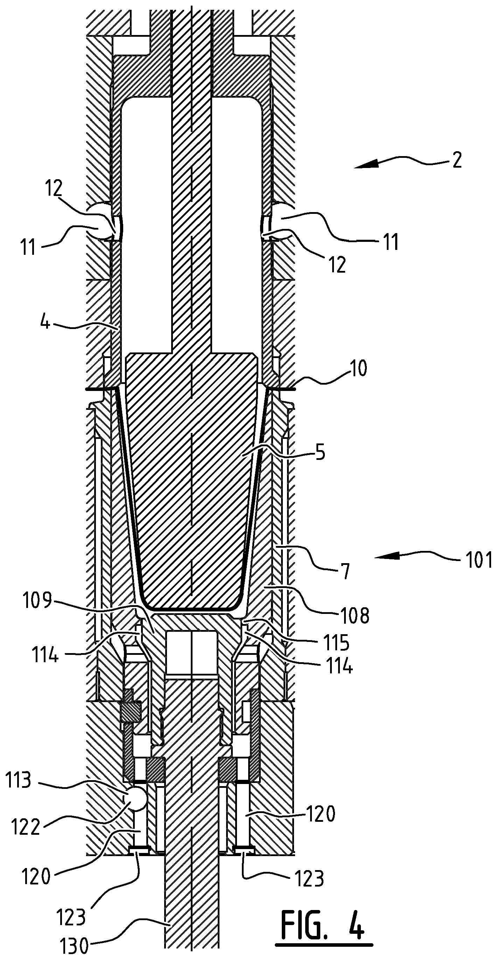

Figure 4 shows a vertical cross-section of a lower mould;

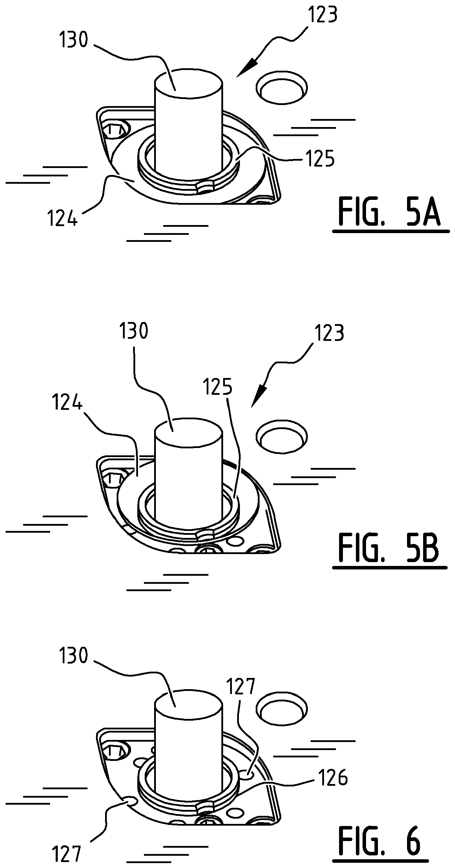

Figures 5A and 5B show an embodiment of a one-way valve for a mould according to the invention in respectively closed and open position; and
Figure 6 is a detail view of the mounting element for the one-way valve of figure 5.

Figure 4 shows a vertical cross-section of a lower mould 101, wherein pre-stretcher 5 of upper mould 2 has been moved downward so as to form the product. The construction of lower mould 101 is largely the same as in figures 1-3. In this case however, lower mould 101 comprises a second venting channel 120 in addition to a first venting channel 113. First venting channel 113 and second venting channel 120 have a common part 114 debouching via gaps 115 into the mould cavity formed by forming base 109 and forming sleeve 108. First venting channel 113 and second venting channel 120 branch off at branching point 122. Second venting channel 120 extends downward here to an underside of lower mould 101. Mounted on this underside is a one-way valve 123 which limits or restricts an airflow from an area surrounding lower mould 101 in the direction of the mould cavity.

The operation of lower mould 101 can be described as follows. Immediately following the downward movement of pre-stretcher 5 compressed air is introduced into the mould cavity via openings 11 and 12. This compressed air presses foil 10 against forming base 109 and forming sleeve 108. The air between foil 10 and forming base 109 and forming sleeve 108 is hereby compressed. This air can however escape via gaps 115 of common part 114. The overpressure resulting from the compression of the air will move one-way valve 123 to an open position. Second venting channel 120 is hereby left clear. The relatively low air resistance enables the compressed air to flow away quickly, whereby foil 10 can quickly come to lie against forming sleeve 108 and forming base 109. The thus achieved improved cooling enables the throughput speed of the thermoforming process to be increased and/or products to be formed with fewer variations in product geometry.

During or immediately following application of the compressed air the vacuum pump will begin evacuating the first venting channel 113.

The evacuation creates an underpressure in both first venting channel 113 and second venting channel 120. The pressure difference between the area surrounding lower mould 101 and second venting channel 120 will cause one-way valve 123 to move to a closed position. This prevents false air being drawn in from an area surrounding lower mould 101. A lower underpressure can be obtained in the mould cavity as a result hereof. Foil 10 will hereby lie more closely against forming sleeve 108 and forming base 109, whereby the cooling is further improved. The formed product thus also remains in the mould cavity if lower mould 101 is tilted, for instance for the purpose of removing the formed product.

Figures 5A and 5B show an embodiment of a one-way valve for a mould according to the invention in respectively closed and open position. One-way valve 123 comprises a flexible and/or resilient element 124, embodied here as a rubber disc mounted around a mounting element 125. This latter element is shown in more detail in figure 6. This figure shows how mounting element 125 is provided with a peripheral groove 126 in which rubber disc 124 is mounted. Also shown are outlets 127 of second venting channels 120.

Figures 4, 5A and 5B show a knock-out pin 130 for engaging the forming base and knocking out the product formed in the mould cavity. Figures 5A and 5B show how mounting element 125 takes the form of a sleeve which is connected to the base plate and in which the knock-out pin can move.

The form and material choice of the flexible and/or resilient element make it possible to apply a bias. Such a bias can for instance ensure that rubber disc 124 moves sooner from the open position to the closed position.

The flexible and/or resilient element can be manufactured from at least one material from the group of materials consisting of: rubber and plastic.

It will be apparent that a plurality of second venting channels 120 can be provided per mould cavity, each debouching separately on the underside of lower mould 101. First venting channels 113 of a plurality of mould cavities in lower mould 101 are however usually combined to form one channel for the purpose of facilitating the connection to a vacuum pump. Making the distinction between first and second venting channels for respectively evacuating and venting creates the option of optimizing the air resistance per channel. After all, the second venting channels need not be connected to a vacuum pump. These channels can further be embodied independently and separately per mould cavity. The air resistance can hereby be made considerably lower during the venting process than during evacuation. The air resistance is usually determined in this latter process by the relatively great lengths of the channels and the small diameter possible in the height direction of the mould owing to the presence of other components.

The invention is discussed in the foregoing inter alia with reference to embodiments thereof. It will be apparent that the scope of protection of the present invention is not limited thereto but is defined by the following claims.

## Claims

1. Mould comprising a base plate (6) having accommodated therein at least one form-defining element, such as a forming sleeve (8, 108) and a forming base (9, 109), for defining a mould cavity for a product to be formed from a heated plastic foil (10), wherein the mould is provided with a first venting channel (113) which debouches into the mould cavity and is configured to discharge air between the foil (10) and said at least one form-defining element,
wherein the mould comprises a second venting channel (120) which likewise debouches into the mould cavity and leads out of the mould, wherein the air resistance of the second venting channel (120) is considerably lower than the air resistance of the first venting channel (113), wherein the air resistance is the flow resistance an airflow would encounter in the channel, and wherein the mould comprises a one-way valve (123),
**characterized in that**,
the one-way valve (123) is mounted in or on the second venting channel (120) for the purpose of limiting or preventing an airflow from an area outside the mould through the second venting channel (120) in the direction of the mould cavity,
and wherein the first venting channel (113) is configured to be connected at an end facing away from the mould cavity to means, such as a vacuum pump, for evacuating or providing an underpressure in the first venting channel (113).

2. Thermoforming device, comprising:
a mould as claimed in claim 1; and
means, such as a vacuum pump, for evacuating or providing an underpressure in the first venting channel (113).

3. Thermoforming device as claimed in claim 2, wherein the one-way valve (123) comprises a resilient and/or flexible element (124) which can move between an open position for leaving clear the second venting channel (120) and a closed position for at least partially closing the second venting channel (120).

4. Thermoforming device as claimed in claim 3, wherein the one-way valve (123) is configured to move to the open position as a result of an overpressure in the second venting channel (120) relative to an area surrounding the mould, and wherein the one-way valve (123) is configured to move to the closed position as a result of an underpressure in the second venting channel (120) relative to an area surrounding the mould.

5. Thermoforming device as claimed in claim 4, wherein the resilient and/or flexible element (124) is provided with a bias for movement to the open position.

6. Thermoforming device as claimed in any of the claims 3-5, wherein the mould cavity is formed in an upper side of the mould (2) and wherein the second venting channel (120) debouches in an underside of the mould (1, 101).

7. Thermoforming device as claimed in claim 6, wherein the one-way valve (123) is mounted on or close to the underside of the mould (1, 101).

8. Thermoforming device as claimed in claim 7, wherein the resilient and/or flexible element (124) is mounted over an outlet of the second venting channel (120), wherein in the open position the resilient and/or flexible element (124) is curved away from the outlet so as to leave it clear and wherein in the closed position the resilient and/or flexible element (124) at least partially covers the outlet.

9. Thermoforming device as claimed in claim 8, comprising a mounting element (125) on the underside of the mould (1, 101) which is provided with a peripheral groove (126), wherein the second venting channel (120) debouches into an area around the mounting element (125) and wherein the resilient and/or flexible element (124) is mounted in the peripheral groove (126) and extends at least in the closed position over the outlet of the second venting channel (120) for closing thereof.

10. Thermoforming device as claimed in claim 9, comprising a knock-out pin (130) for engaging the forming base and knocking out the product formed in the mould cavity, wherein the mounting element (125) is a sleeve (8, 108) which is connected to the base plate (6) and in which the knock-out pin (130) can move.

11. Thermoforming device as claimed in any of the claims 3-10, wherein the flexible and/or resilient element (124) can be manufactured from at least one material from the group of materials of: rubber and plastic.

12. Thermoforming device as claimed in claim 2, wherein the one-way valve (123) comprises a mechanically pivoting valve which can pivot between a closed position, in which the valve lies against a stop such as an outer side of the mould and so at least partially closes the second venting channel (120), and an open position in which the valve is rotated away in order to leave the second venting channel (120) clear.

13. Thermoforming device as claimed in claim 12, wherein the one-way valve (123) is electronically controllable.

14. Thermoforming device as claimed in any of the claims 2-13, wherein a plurality of second venting channels (120) are formed per mould cavity and wherein the one-way valve (123) is configured to simultaneously limit or prevent an airflow from a surrounding area outside the mould through the plurality of second venting channels (120) in the direction of the mould cavity.

15. Thermoforming device as claimed in claim 14, wherein the mould comprises a plurality of mould cavities, wherein the first venting channels (113) associated with the plurality of mould cavities debouch into a common venting channel, and wherein the second venting channels (120) are separated per mould cavity from the second venting channels of an adjacent mould cavity.

16. Thermoforming device as claimed in any of the claims 2-15, wherein the first venting channel (113) and the second venting channel (120) have a common part extending between the mould cavity and a branching point (122).

17. Thermoforming device as claimed in claim 16, wherein the one-way valve (123) is mounted downstream of the branching point (122).

18. Method for forming a product, comprising of: providing the thermoforming device of any of the claims 2-17; providing a plastic foil; forming the product from the plastic foil using the thermoforming device.

## Patentansprüche

1. Form, die eine Grundplatte (6) umfasst, in welcher mindestens ein formbestimmendes Element, wie zum Beispiel eine Formhülse (8, 108), und eine Formbasis (9, 109) bestimmt sind, um einen Formhohlraum für ein Produkt, das aus einer erwärmten Kunststofffolie (10) geformt werden soll, zu bestimmen, wobei die Form mit einem ersten Belüftungskanal (113) ausgestattet ist, der in den Formhohlraum einmündet und ausgebildet ist, um Luft zwischen der Folie (10) und dem mindestens einen formbestimmenden Element abzulassen,
wobei die Form einen zweiten Belüftungskanal (120) umfasst, welcher ebenfalls in den Formhohlraum einmündet und aus der Form hinaus führt, wobei der Luftwiderstand des zweiten Belüftungskanals (120) erheblich niedriger ist als der Luftwiderstand des ersten Belüftungskanals (113), wobei der Luftwiderstand der Strömungswiderstand ist, auf den ein Luftstrom im Kanal treffen würde, und wobei die Form ein Einwegventil (123) umfasst,
**dadurch gekennzeichnet, dass**
das Einwegventil (123) in oder an dem zweiten Belüftungskanal (120) montiert ist, um einen Luftstrom von einem Bereich außerhalb der Form durch den zweiten Belüftungskanal (120) in Richtung des Formhohlraums zu beschränken oder zu verhindern, und wobei der erste Belüftungskanal (113) ausgebildet ist, um an einem Ende, das vom Formhohlraum abgewandt ist, mit Mitteln, wie zum Beispiel einer Vakuumpumpe, verbunden zu werden, um den ersten Belüftungskanal (113) zu leeren oder dort einen Unterdruck herzustellen.

2. Wärmeformvorrichtung, die Folgendes umfasst:
eine Form gemäß Anspruch 1; und
Mittel, wie zum Beispiel eine Vakuumpumpe, um den ersten Belüftungskanal (113) zu leeren oder dort einen Unterdruck herzustellen.

3. Wärmeformvorrichtung gemäß Anspruch 2, wobei das Einwegventil (123) ein elastisches und/oder flexibles Element (124) umfasst, das sich zwischen einer offenen Position zum Freilassen des zweiten Belüftungskanals (120) und einer geschlossenen Position zum zumindest partiellen Verschließen des zweiten Belüftungskanals (120) bewegen kann.

4. Wärmeformvorrichtung gemäß Anspruch 3, wobei das Einwegventil (123) ausgebildet ist, um sich infolge eines Überdrucks im zweiten Belüftungskanal (120) relativ zu einem Bereich, der die Form umgibt, in die offene Position zu bewegen, und wobei das Einwegventil (123) ausgebildet ist, um sich infolge eines Unterdrucks im zweiten Belüftungskanal (120) im Verhältnis zu einem Bereich, der die Form umgibt, in die geschlossene Position zu bewegen.

5. Wärmeformvorrichtung gemäß Anspruch 4, wobei das elastische und/oder flexible Element (124) mit einer Vorspannung für die Bewegung in die offene Position versehen ist.

6. Wärmeformvorrichtung gemäß einem beliebigen der Ansprüche 3-5, wobei der Formhohlraum in einer Oberseite der Form (2) angebracht ist und wobei der zweite Belüftungskanal (120) in eine Unterseite der Form (1, 101) einmündet.

7. Wärmeformvorrichtung gemäß Anspruch 6, wobei das Einwegventil (123) an oder nahe der Unterseite der Form (1, 101) montiert ist.

8. Wärmeformvorrichtung gemäß Anspruch 7, wobei das elastische und/oder flexible Element (124) über einem Auslass des zweiten Belüftungskanals (120) angebracht ist, wobei sich in der offenen Position das elastische und/oder flexible Element (124) vom Auslass fort krümmt, um ihn frei zu lassen, und wobei das elastische und/oder flexible Element (124) in der geschlossenen Position den Auslass zumindest teilweise bedeckt.

9. Wärmeformvorrichtung gemäß Anspruch 8, die ein Montageelement (125) an der Unterseite der Form (1, 101) umfasst, welches mit einer peripheren Nut (126) ausgestattet ist, wobei der zweite Belüftungskanal (120) in einen Bereich um das Montageelement (125) herum einmündet und wobei das elastische und/oder flexible Element (124) in der peripheren Nut (126) montiert ist und sich mindestens in der geschlossenen Position über den Auslass des zweiten Belüftungskanals (120) erstreckt, um ihn zu verschließen.

10. Wärmeformvorrichtung gemäß Anspruch 9, die einen Auswerferstift (130) umfasst, zum Eingreifen in die Formbasis und zum Auswerfen des in dem Formhohlraum geformten Produkts, wobei das Montageelement (125) eine Hülse (8, 108) ist, die mit der Grundplatte (6) verbunden ist und in der sich der Auswerferstift (130) bewegen kann.

11. Wärmeformvorrichtung gemäß einem beliebigen der Ansprüche 3-10, wobei das flexible und/oder elastische Element (124) aus mindestens einem Material aus der Gruppe von Materialien hergestellt werden kann, die aus Gummi und Kunststoff besteht.

12. Wärmeformvorrichtung gemäß Anspruch 2, wobei das Einwegventil (123) ein mechanisch schwenkbares Ventil umfasst, das zwischen einer geschlossenen Position, in welcher das Ventil gegen einen Anschlag, wie zum Beispiel eine Außenseite der Form, aufliegt, um so den zweiten Belüftungskanal (120) zumindest teilweise zu schließen, und einer offenen Position schwenken kann, in welcher das Ventil weggedreht ist, um den zweiten Belüftungskanal (120) frei zu lassen.

13. Wärmeformvorrichtung gemäß Anspruch 12, wobei das Einwegventil (123) elektrisch steuerbar ist.

14. Wärmeformvorrichtung gemäß einem beliebigen der Ansprüche 2-13, wobei eine Vielzahl zweiter Belüftungskanäle (120) je Formhohlraum geformt ist und wobei das Einwegventil (123) ausgebildet ist, um gleichzeitig einen Luftstrom von einem Umgebungsbereich außerhalb der Form durch die Vielzahl zweiter Belüftungskanäle (120) in Richtung des Formhohlraums zu beschränken oder zu verhindern.

15. Wärmeformvorrichtung gemäß Anspruch 14, wobei die Form eine Vielzahl von Formhohlräumen umfasst, wobei die ersten Belüftungskanäle (113), die mit der Vielzahl von Formhohlräumen verbunden sind, in einen gemeinsamen Belüftungskanal einmünden und wobei die zweiten Belüftungskanäle (120) je Formhohlraum von den zweiten Belüftungskanälen eines angrenzenden Formhohlraums getrennt sind.

16. Wärmeformvorrichtung gemäß einem beliebigen der Ansprüche 2-15, wobei der erste Belüftungskanal (113) und der zweite Belüftungskanal (120) einen gemeinsamen Abschnitt haben, der sich zwischen dem Formhohlraum und einem Verzweigungspunkt (122) erstreckt.

17. Wärmeformvorrichtung gemäß Anspruch 16, wobei das Einwegventil (123) stromabwärts vom Verzweigungspunkt (122) montiert ist.

18. Verfahren zum Formen eines Produkts, das aus Folgendem besteht: Bereitstellen der Wärmeformvorrichtung gemäß einem beliebigen der Ansprüche 2-17; Bereitstellen einer Kunststofffolie; Formen des Produkts aus der Kunststofffolie mit Hilfe der Wärmeformvorrichtung.

## Revendications

1. Moule comprenant une plaque de base (6) ayant logé à l'intérieur au moins un élément définissant une forme, tel qu'un manchon de formage (8, 108) et une base de formage (9, 109), pour définir une cavité de moule pour un produit à former à partir d'une feuille en plastique chauffée (10), où le moule est fourni avec un premier canal d'aération (113) qui débouche dans la cavité de moule et est configuré pour décharger de l'air entre la feuille (10) et ledit au moins un élément définissant une forme,
où le moule comprend un second canal d'aération (120) qui de même débouche dans la cavité de moule et sort du moule, où la résistance à l'air du second canal d'aération (120) est considérablement plus faible que la résistance à l'air du premier canal d'aération (113), où la résistance à l'air est la résistance à l'écoulement qu'un courant d'air rencontrerait dans le canal, et où le moule comprend une vanne à une voie (123),
**caractérisé en ce que**,
la vanne à une voie (123) est montée dans ou sur le second canal d'aération (120) pour l'objectif de limiter ou de prévenir un courant d'air d'une zone hors du moule à travers le second canal d'aération (120) dans la direction de la cavité de moule,
et où le premier canal d'aération (113) est configuré pour être connecté à une extrémité à l'opposé de la cavité de moule à un moyen, tel qu'une pompe à vide, pour évacuer ou fournir une sous-pression dans le premier canal d'aération (113).

2. Dispositif de thermoformage, comprenant :
un moule selon la revendication 1 ; et
un moyen, tel qu'une pompe à vide, pour évacuer ou fournir une sous-pression dans le premier canal d'aération (113).

3. Dispositif de thermoformage selon la revendication 2, dans lequel la vanne à une voie (123) comprend un élément résilient et/ou flexible (124) qui peut se déplacer entre une position ouverte pour laisser dégagé le second canal d'aération (120) et une position fermée pour au moins partiellement fermer le second canal d'aération (120).

4. Dispositif de thermoformage selon la revendication 3, dans lequel la vanne à une voie (123) est configurée pour se déplacer à la position ouverte suite à une surpression dans le second canal d'aération (120) relativement à une zone entourant le moule, et où la vanne à une voie (123) est configurée pour se déplacer à la position fermée suite à une sous-pression dans le second canal d'aération (120) relativement à une zone entourant le moule.

5. Dispositif de thermoformage selon la revendication 4, dans lequel l'élément résilient et/ou flexible (124) est fourni avec un biais pour le mouvement à la position ouverte.

6. Dispositif de thermoformage selon l'une quelconque des revendications 3 à 5, dans lequel la cavité de moule est formée dans une partie supérieure du moule (2) et où le second canal d'aération (120) débouche dans un côté inférieur du moule (1, 101).

7. Dispositif de thermoformage selon la revendication 6, dans lequel la vanne à une voie (123) est montée sur ou près du côté inférieur du moule (1, 101).

8. Dispositif de thermoformage selon la revendication 7, dans lequel l'élément résilient et/ou flexible (124) est monté sur une sortie du second canal d'aération (120), où dans la position ouverte l'élément résilient et/ou flexible (124) est incurvé à l'écart de la sortie de manière à la laisser dégagée et où dans la position ouverte l'élément résilient et/ou flexible (124) recouvre au moins partiellement la sortie.

9. Dispositif de thermoformage selon la revendication 8, comprenant un élément de montage (125) sur le côté inférieur du moule (1, 101) qui est fourni avec un sillon périphérique (126), où le second canal d'aération (120) débouche dans une zone autour de l'élément de montage (125) et où l'élément résilient et/ou flexible (124) est monté dans le sillon périphérique (126) et s'étend au moins dans la position fermée sur la sortie du second canal d'aération (120) pour sa fermeture.

10. Dispositif de thermoformage selon la revendication 9, comprenant une broche de knockout (130) pour engager la base de formage et réaliser le knockout du produit formé dans la cavité de moule, où l'élément de montage (125) est un manchon (8, 128) qui est connecté à la plaque de base (6) et dans lequel la broche de knockout (130) peut se déplacer.

11. Dispositif de thermoformage selon l'une quelconque des revendications 3 à 10, dans lequel l'élément résilient et/ou flexible (124) peut être fabriqué à partir d'au moins un matériau du groupe de matériaux de : caoutchouc et plastique.

12. Dispositif de thermoformage selon la revendication 2, dans lequel la vanne à une voie (123) comprend une vanne à pivot mécanique qui peut pivoter entre une position fermée, dans laquelle la vanne repose contre un arrêt tel qu'un côté externe du moule et ainsi ferme au moins partiellement le second canal d'aération (120), et une position ouverte dans laquelle la vanne est tournée à l'écart pour laisser le second canal d'aération (120) dégagé.

13. Dispositif de thermoformage selon la revendication 12, dans lequel la vanne à une voie (123) est contrôlable électroniquement.

14. Dispositif de thermoformage selon l'une quelconque des revendications 2 à 13, dans lequel une pluralité de seconds canaux d'aération (120) sont formés par cavité de moule et où la vanne à une voie (123) est configurée pour simultanément limiter ou prévenir un courant d'air d'une zone entourant l'extérieur du moule par une pluralité de seconds canaux d'aération (120) dans la direction de la cavité de moule.

15. Dispositif de thermoformage selon la revendication 14, dans lequel le moule comprend une pluralité de cavités de moules, où les premiers canaux d'aération (113) associés avec la pluralité de cavités de moule débouchent dans un canal d'aération commun, et où les seconds canaux d'aération (120) sont séparés par la cavité de moule des seconds canaux d'aération d'une cavité de moule adjacente.

16. Dispositif de thermoformage selon l'une quelconque des revendications 2 à 15, dans lequel le premier canal d'aération (113) et le second canal d'aération (120) ont une partie commune s'étendant entre la cavité de moule et un point de branchement (122).

17. Dispositif de thermoformage selon la revendication 16, dans lequel la vanne à une voie (123) est montée en aval du point de branchement (122).

18. Procédé de formage d'un produit, comprenant de : fournir le dispositif de thermoformage selon l'une quelconque des revendications 2 à 17 ; fournir une feuille de plastique ; former le produit à partir de la feuille de plastique en utilisant le dispositif de thermoformage.
